# EUROPÄISCHE PATENTANMELDUNG

(11) **EP 4 503 336 A1**
(43) Veröffentlichungstag der Anmeldung: **05.02.2025**
(21) Anmeldenummer: 23189779.4
(22) Anmeldetag: 04.08.2023
(51) Int. Cl.: H01R 4/02, H01R 4/58, H01R 43/02, H01R 31/08, H01R 43/16

(54) **KONTAKTIERUNGSELEMENT ZUM ELEKTRISCHEN KONTAKTIEREN VON ZUMINDEST ZWEI ELEKTRISCHEN KONTAKTELEMENTEN, ANORDNUNG SOWIE VERFAHREN ZUM KONTAKTIEREN VON ELEKTRISCHEN KONTAKTELEMENTEN MITTELS LASERSTRAHLSCHWEISSEN**

(71) Anmelder: Siemens Aktiengesellschaft, 80333 München (DE)
(72) Erfinder: Ganster, Axel, 84419 Schwindegg (DE); Lasch, Markus, 81927 München (DE); Stegmeier, Stefan, 81825 München (DE); Weisbrod, Erik, 81369 München (DE)
(74) Vertreter: Siemens Patent Attorneys

(57) **Zusammenfassung**

Die Erfindung betrifft ein Kontaktierungselement (4) zum elektrischen Kontaktieren von zumindest zwei elektrischen Kontaktelementen (2, 3), mit
- einer ersten Kontaktierungsseite (7) zum Kontaktieren des ersten elektrischen Kontaktelementes (2),
- einer zweiten Kontaktierungsseite (8) zum Kontaktieren des zweiten elektrischen Kontaktelements (3), wobei
- die erste Kontaktierungsseite (7) einen ersten Auflagebereich (10) und die zweite Kontaktierungsseite (8) einen zweiten Auflagebereich (11) aufweist, wobei
- die erste Kontaktierungsseite (7) mittels des ersten Auflagebereich (10) auf einer Oberfläche (13) des ersten elektrischen Kontaktelements (4) anliegend anordbar ist,
- die zweite Kontaktierungsseite (8) mittels des zweiten Auflagebereich (11) auf einer Oberfläche (14) des zweiten elektrischen Kontaktelements (3) anliegend anordbar ist, und wobei
- der erste Auflagebereich (10) in Bezug zu einer Haupterstreckungsebene der ersten Kontaktierungsseite (7) und der zweite Auflagebereich (11) in Bezug zu einer Haupterstreckungsebene der zweiten Kontaktierungsseite (8) nach Außen ragen.

Des Weiteren betrifft die Erfindung eine Anordnung (1) sowie ein Verfahren.

## Beschreibung

Die Erfindung betrifft ein Kontaktierungselement zum elektrischen Kontaktieren von zumindest zwei elektrischen Kontaktelementen. Des Weiteren betrifft die Erfindung eine Anordnung mit einem ersten und einem zweiten elektrischen Kontaktelement, wobei die beiden elektrischen Kontaktelemente mittels eines entsprechenden Kontaktierungselements kontaktiert sind. Ebenso betrifft die Erfindung ein Verfahren zum Kontaktieren von zumindest zwei elektrischen Kontaktelementen mittels eines Laserstrahlschweißverfahrens.

In der Elektronik beziehungsweise Leistungselektronik werden elektrische Kontakte beziehungsweise Kontaktelemente miteinander verbunden, um eine elektrische Verbindung herzustellen. Hierzu bietet sich neben den klassischen Methoden wie Verpressen, Löten, Drahtbonden und Kleben heutzutage das Laserstrahlschweißverfahren an, da dieses Verfahren kontaktlos ist und mit Hilfe von Robotik beziehungsweise automatisierten Systemen verwendet werden kann. Zudem wird Energie an der Stelle eingebracht, wo sie auch benötigt wird, was im Kontext "Sustainability" eine immer größere Rolle spielt.

Wenn beispielsweise zwei metallische Objekte, wie zum Beispiel elektrische Kontaktelemente, über ein Laserstrahlschweißverfahren stoffschlüssig miteinander verbunden werden sollen, ist es unabdingbar, dass sich diese in direktem Kontakt befinden, also ein Nullspalt vorliegt. Das aufzuschmelzende Stoffvolumen sollte möglichst geringgehalten werden, um thermomechanische Spannungen zu minimieren, welche bei Bauelementen, wie zum Beispiel Halbleitern, Spulen oder Kondensatoren zur Rissbildung und somit zur Schädigung führen können.

Um das Laserschweißen von zwei sich berührenden elektrischen Kontakten zu ermöglichen, gibt es bereits zahlreiche Methoden, wie zum Beispiel Überlappschweißen, Kehlnahtschweißen, Widerstandsschweißen etc..

Hierbei sollen beziehungsweise müssen folgende Punkte beachtet werden.

Die Einkopplung des Laserstrahls in den Werkstoff muss zunächst einmal sichergestellt werden. Die Wellenlänge der Laserstrahlung muss auf den Werkstoff angepasst sein, um eine möglichst hohe Licht-Absorption zu erzielen. Das Einkoppeln der Laserstrahlung ist umso problematischer, je höher die Reflektivität des Werkstoffes, wie zum Beispiel bei Kupfer, ist. Bei Kupfer kann die Einkopplung bei einer Wellenlänge von 1,06 um verbessert werden, indem eine dünne, weniger stark reflektierende Schicht aufgebracht beziehungsweise die Oberfläche verändert wird, wie zum Beispiel mittels Verzinnung, Vernickelung. Dies erhöht jedoch den Aufwand und ist technisch auch anspruchsvoll. Auch die Rauheit der Oberfläche oder Oxidschichten haben Einfluss auf das Reflexions-Absorptionsverhalten des Werkstoffs.

Des Weiteren zu beachten ist die Aufschmelzung des Werkstoffes. Bei Kupfer nimmt die Reflektivität mit steigender Temperatur ab. Sobald die Kupferoberfläche aufschmilzt, wird im Vergleich zu einer blanken Kupferoberfläche bei Raumtemperatur ein Vielfaches der Laserleistung absorbiert. Wird eine ausreichend hohe Laserleistung beziehungsweise Laserleistungsdichte verwendet, dann wird zunächst das Material erwärmt, was mit einer Absorption einhergeht. Bei vermehrter Einkopplung des Laserstrahls wird eine Dampfkapillare in der Schmelze ausgebildet, ein so genanntes Keyhole. Es erfolgt dann eine Vielfach-Reflexion an der Keyhole-Wand, das heißt, der Laserstrahl wird vollständig absorbiert. Sobald sich ein Keyhole ausgebildet hat, folgt eine schlagartige Einkopplung der gesamten Laserleistung in das Werkstück. Dies ist der Grund, warum mit den herkömmlichen Lasertypen im nahen und fernen Infrarot-Wärmeleistungsschweißen von reinem Kupfer kaum möglich ist. Der Prozessbereich zwischen "beginnender Aufschmelzung" und "Überschreiten der Schwellintensität zum Tiefschweißen" ist sehr klein. Deshalb wird oft die grüne Wellenlänge verwendet, da dort eine höhere Absorption, insbesondere für Kupfer, vorhanden ist.

Ein weiterer zu beachtender Punkt ist das Verbinden der Kontaktstücke. Beide Kontaktstücke müssen beim Laserstrahlschweißprozess in Kontakt stehen und somit keinerlei Spalt zueinander aufweisen. Ein Spalt würde ein Anschmelzen des oberen Kontaktpartners bewirken beziehungsweise zu einer zu großen Deponierung der Laserenergie und dann einem schlagartigen Durchschweißen des zweiten Kontaktpartners führen. Die Folge sind hohe Aufschmelzvolumina. Erstarren diese, so ergeben sich große Zugspannungen, welche wiederum sensible Bauteile, wie Silizium-Bauelemente, beschädigen können, wie zum Beispiel in Form einer Rissbildung. Deshalb müssen die beiden Kontakte miteinander verpresst werden, was aufwendig ist, da spezielle Werkzeuge nötig sind.

Eine Aufgabe der vorliegenden Erfindung besteht darin, ein Kontaktieren von elektrischen Kontakten mittels eines Laserstrahlschweißverfahrens zu verbessern.

Diese Aufgabe wird durch ein Kontaktierungselement, eine Anordnung sowie ein Verfahren gemäß den unabhängigen Patentansprüchen gelöst. Sinnvolle Weiterbildungen ergeben sich aus den abhängigen Patentansprüchen.

Ein Aspekt (erster Aspekt) der Erfindung betrifft ein Kontaktierungselement zum elektrischen Kontaktieren von zumindest zwei elektrischen Kontaktelementen, mit
- einer ersten Kontaktierungsseite zum Kontaktieren des ersten elektrischen Kontaktelementes,
- einer zweiten Kontaktierungsseite zum Kontaktieren des zweiten elektrischen Kontaktelements, wobei
- die erste Kontaktierungsseite zumindest einen ersten Auflagebereich und die zweite Kontaktierungsseite zumindest einen zweiten Auflagebereich aufweist, wobei
- die erste Kontaktierungsseite mittels des ersten Auflagebereichs auf einer Oberfläche des ersten elektrischen Kontaktelements anliegend anordbar ist,
- die zweite Kontaktierungsseite mittels des zweiten Auflagebereich auf einer Oberfläche des zweiten elektrischen Kontaktelements anliegend anordbar ist, und wobei
- der erste Auflagebereich in Bezug zu einer Haupterstreckungsebene der ersten Kontaktierungsseite nach Außen ragt und der zweite Auflagebereich in Bezug zu einer Haupterstreckungsebene der zweiten Kontaktierungsseite nach Außen ragt.

Das erfindungsgemäße Kontaktierungselement kann vorteilhaft für ein Kontaktieren von elektrischen Kontakten mittels eines Laserstrahlschweißens beziehungsweise Laserstrahlschweißverfahrens verwendet werden. Mittels des Kontaktierungselements können zumindest zwei verschiedene und zueinander beabstandet angeordnete beziehungsweise positionierte elektrische Kontaktelemente beziehungsweise elektrische Kontakte elektrisch kontaktiert, gekoppelt oder kontaktiert werden. Mit anderen Worten ausgedrückt kann das Kontaktierungselement als Kontaktbrücke, Kontaktblech, Stromschiene oder um ein sonstiges Verbindungselement zur Stromübertragung ausgebildet sein.

Insbesondere kann das Kontaktierungselement in einer Fertigung beziehungsweise bei einem Herstellen von Leistungselektronik-Teilen und/oder Elektronikbauteilen verwendet werden.

Bei den beiden elektrischen Kontaktelementen beziehungsweise elektrischen Kontakten kann es sich um Kontakte von elektronischen Bauteilen beziehungsweise elektrischen Bauelementen wie Halbleiter, Spulen oder Kondensatoren handeln.

Insbesondere können die elektrischen Kontaktelemente innerhalb einer Leiterplatte beziehungsweise eines integrierten Schaltkreises oder eines sonstigen beliebigen elektronischen Bauteils angeordnet sein. Beispielsweise kann es sich bei den beiden elektrischen Kontakten beziehungsweise elektrischen Kontaktelementen jeweils um einen Plus-Pol oder um einen Minus-Pol handeln, so dass mittels des Kontaktierungselements eine elektrische Verbindung zwischen den beiden Kontaktelementen hergestellt werden kann.

Da solche elektronischen Bauelemente sehr sensibel sind, ist bei der Kontaktierung mittels eines Laserstrahlschweißens ein geringer Energieeintrag von Vorteil, um keine Beschädigungen hervorzurufen. Hierbei sollte bei einem Verschweißen des Kontaktierungselements mit den Kontaktelementen ein geringes Aufschmelzen des jeweiligen Stoffes beziehungsweise Werkstoffes vorgenommen werden. Dies wird insbesondere dadurch erreicht, da das Kontaktierungselement mittels der Auflagebereiche, insbesondere punktuell, auf den elektrischen Kontaktelementen und insbesondere auf deren Oberfläche, aufliegt. Mit anderen Worten ausgedrückt liegt das Kontaktierungselement ausschließlich mittels der Auflagebereiche an den Kontaktelementen an beziehungsweise auf.

Ein Laserstrahl beziehungsweise eine Laserstrahlung eines Laserstrahlschweißverfahrens wird insbesondere an diesen Auflagebereichen eingebracht beziehungsweise eingewirkt. Somit erfolgt eine Konzeptierung an diesen speziellen Auflagebereichen beziehungsweise Auflagepunkten. Hierbei ergibt sich ein weiterer Vorteil, da durch diese vorgegebenen beziehungsweise speziell konstruierten Auflagebereiche eine präzise, insbesondere genaue Auflage der zu verschmelzenden beziehungsweise zu verbindenden Elemente vorliegt. Durch die Auflage des Kontaktierungselements mittels der Auflagebereiche an dem Kontaktelement kann ein im Wesentlichen genauer Nullspalt realisiert werden. Mit anderen Worten liegt das Kontaktierungselement mittels der Auflagebereiche unmittelbar anliegend an den Kontaktelementen an, so dass insbesondere die Auflagebereiche direkt auf der Oberfläche beziehungsweise an der Oberfläche der Kontaktelemente beziehungsweise Kontakte anliegt. Somit kann bei einem Laserstrahlschweißverfahren eine punktuelle und präzise Kontaktierung erfolgen, ohne zu großes Stoffvolumen aufzuschmelzen und einen Nullspalt zwischen zwei zu kontaktierenden Elementen beziehungsweise Bauteilen zu verringern beziehungsweise einzustellen.

Um insbesondere den Nullspalt realisieren zu können und eine punktuelle Auflage des Kontaktierungselements zu erreichen, sind die Auflagebereiche derart ausgebildet, dass diese hin zu der jeweiligen Oberfläche der Kontaktelemente weg ragen beziehungsweise nach außen gerichtet wegstehen. Somit liegt das Kontaktierungselement auf diesen punktuellen beziehungsweise vorgegebenen Auflagebereichen auf.

Beispielsweise kann das Kontaktierungselement als Kupferplatte oder als eine sonstige metallische, elektrisch leitende, Platte oder Blech oder Draht ausgestaltet sein. Mit Hilfe des erfindungsgemäßen Kontaktierungselements kann eine einfache Erreichung von Nullspalten zur Laser-Ankontaktierung von sensiblen Bauelementen realisiert werden. Des Weiteren kann eine geringe Volumenaufschmelzung bei Verwendung eines Laserstrahlschweißens realisiert werden, so dass ein geringerer thermomechanischer Stress bei elektronischen Bauelementen entsteht. Des Weiteren kann eine einfache und kostengünstige Herstellung eines oberen Kontaktpartners ("lead frame") vorgenommen werden.

Mit anderen Worten ausgedrückt können mit Hilfe des Kontaktierungselements die Problematiken des Nullspalts und die Minimierung des aufgeschmolzenen Stoffvolumens umgangen werden, so dass ein Laserstrahlschweißverfahren in der Fertigung von, insbesondere sensiblen, elektronischen Bauelementen verwendet werden kann.

In einem Ausführungsbeispiel ist vorgesehen, dass der erste Auflagebereich und der zweite Auflagebereich kugelförmig ausgestaltet sind, wobei der erste Auflagebereich bei einem Kontaktierungsvorgang zum ersten elektrischen Kontaktelement und der zweite Auflagebereich bei dem Kontaktierungsvorgang zum zweiten elektrischen Kontaktelement hin gewölbt sind. Durch diese gewölbte beziehungsweise bauchige beziehungsweise kugelförmige Ausgestaltung der Auflagebereiche liegt das Kontaktierungselement auf diesen kugelförmigen Ausgestaltungen der Auflagebereiche auf. Mit anderen Worten ausgedrückt kann eine punktuelle Auflage bereitgestellt werden, so dass in diesen Auflagebereichen die Schweißpunkte gesetzt werden können. Mit anderen Worten nochmals ausgedrückt kann der erste und/oder der zweite Auflagebereich oder weitere Auflagebereiche als Ausbuchtung, Ausnehmung, Aussparung oder Kerbe ausgebildet sein.

Die Auflagebereiche sind so ausgestaltet, dass sie bei dem Kontaktieren, also wenn das Kontaktierungselement auf die Kontaktelemente aufgebracht beziehungsweise aufgelegt beziehungsweise aufgesteckt wird, zu den Oberflächen der Kontaktelemente hin, also nach außen, gewölbt sind.

In einem Ausführungsbeispiel ist des Weiteren vorgesehen, dass der erste Auflagebereich und der zweite Auflagebereich pyramidenförmig ausgestaltet sind, wobei eine Spitze des pyramidenförmigen ersten Auflagebereichs bei einem Kontaktierungsvorgang zum ersten elektrischen Kontaktelement und eine Spitze des pyramidenförmigen zweiten Auflagebereichs bei dem Kontaktierungsvorgang zum zweiten elektrischen Kontaktelement gerichtet ist. Durch diese pyramidenförmig, also dreieckig ausgestalteten Auflagebereiche kann eine punktuelle und somit direkte Auflage des Kontaktierungselements an den Kontaktelementen hergestellt werden. Die pyramidenförmige beziehungsweise dreieckige Ausgestaltung der Auflagebereiche ist so ausgestaltet, dass bei einem Vorgang der Kontaktierung und somit des Anbringens des Kontaktierungselements an den beziehungsweise auf den Kontaktelementen das Kontaktierungselement, insbesondere ausschließlich, mittels der Spitzen der pyramidenförmig ausgestalteten Auflagebereiche mit den Kontaktelementen in Verbindung ist. Somit ist zum einen ein Nullspalt gegeben und an den Bereichen der Spitzen kann anschließend das Laserstrahlschweißen ansetzen.

In einem weiteren Ausführungsbeispiel ist vorgesehen, dass der erste Auflagebereich und der zweite Auflagebereich plateauförmig ausgestaltet sind, wobei eine zur ersten Kontaktierungsseite parallele Außenseite des plateauförmigen ersten Auflagebereichs bei einem Kontaktierungsvorgang zum ersten elektrischen Kontaktelement und eine zur zweiten Kontaktierungsseite parallele Außenseite des plateauförmigen zweiten Auflagebereichs bei einem Kontaktierungsvorgang zum zweiten elektrischen Kontaktelement gerichtet ist. Mit anderen Worten ausgedrückt sind hier in dieser Ausgestaltung die Auflagebereiche als Erhebung beziehungsweise als Plateau ausgebildet, welche jeweils bei einem Kontaktieren beziehungsweise bei einem Herstellen einer elektrischen Verbindung zwischen den Kontaktelementen jeweils zu der Oberfläche der Kontaktelemente gerichtet ist. Insbesondere liegt bei einem Kontaktieren des Kontaktierungselements mit den Kontaktelementen das Kontaktierungselement, insbesondere ausschließlich beziehungsweise nur, mittels den Außenseiten der plateauförmig ausgebildeten Auflagebereiche an den Kontaktelementen an. Somit kann ein Nullspalt realisiert werden und für das spätere Laserstrahlverschweißen für die feste Kontaktierung kann nur ein geringer Stoff aufgeschmolzen werden, nämlich der Stoff im Bereich der Außenseite der Auflagebereiche.

In einem Ausführungsbeispiel ist vorgesehen, dass eine Materialdicke des ersten Auflagebereichs kleiner als eine Materialdicke der ersten Kontaktierungsseite und eine Materialdicke des zweiten Auflagebereichs kleiner als eine Materialdicke der zweiten Kontaktierungsseite ist. Wie bereits eingangs erwähnt, ist für ein verbessertes beziehungsweise effizientes Verwenden eines Laserstrahlschweißverfahrens für die elektrische Kontaktierung im Hinblick auf sensible elektronische Bauelemente ein geringes Aufschmelzvolumen vorteilhaft. Das Einbringen eines Laserstrahls erfolgt insbesondere im Bereich der Auflagebereiche, so dass durch eine dortige geringere Materialstärke beziehungsweise Materialdicke ein geringeres Volumen aufgeschmolzen wird, um eine stoffschlüssige Verbindung mit den Kontaktelementen herzustellen. Mit anderen Worten ausgedrückt bilden die Auflagebereiche innerhalb des Kontaktierungselements Verjüngungen mit einer, insbesondere deutlich, geringeren Materialstärke beziehungsweise Wandstärke, um bei einem Laserstrahlschweißverfahren weniger Material aufzuschmelzen beziehungsweise aufschmelzen zu müssen, für ein stoffschlüssiges Kontaktieren.

In einem Ausführungsbeispiel ist vorgesehen, dass die erste und zweite Kontaktierungsseite jeweils weitere Auflagebereiche aufweisen. Ebenso denkbar ist, dass nur eine der beiden Kontaktierungsseiten mehrere Auflagebereiche aufweist. Für eine stabile und langlebige Kontaktierung ist es von Vorteil, wenn die beiden Kontaktierungsseiten gleich ausgestaltet sind.

Durch das Einbringen beziehungsweise Ausbilden mehrerer Auflagebereiche und somit mehrerer punktueller Auflagen kann eine bessere elektrische Kontaktierung zwischen Kontaktierungselement und den Kontaktelementen und somit zwischen den Kontaktelementen erreicht werden. Durch mehrere Auflagebereiche beziehungsweise Auflagepunkte kann ein Energieeintrag mittels eines Laserstrahlschweißens pro Auflagebereich reduziert werden, da hier eine Aufteilung vorgenommen wird. Somit kann die benötige Energie und somit die thermische Beanspruchung innerhalb eines jeweiligen Auflagebereichs reduziert beziehungsweise geringgehalten werden.

Die Anzahl der jeweiligen Auflagebereiche kann des Weiteren von einer Art und/oder von einem Typ der zu kontaktierenden Kontaktelemente handeln. Hierbei ist insbesondere eine Dimension, insbesondere eine Größe der Kontaktelemente ausschlaggebend. Je größer und insbesondere je größer die Oberfläche der Kontaktelemente ist, desto mehr Auflagebereiche können vorgesehen werden.

In einem Ausführungsbeispiel ist vorgesehen, dass die Auflagebereiche der beiden Kontaktierungsseiten jeweils beabstandet nebeneinander angeordnet sind. Somit kann vor allem für eine Automatisierung betreffend die Herstellung der Auflagebereiche insbesondere für ein automatisiertes Laserstrahlschweißen eine dazu vorteilhafte Anordnung der mehreren Auflagebereiche bereitgestellt werden, um vor allem die Fertigung und insbesondere die Kontaktierung effizienter gestalten zu können. Hierbei können die Auflagebereiche gleich verteilt nebeneinander und insbesondere in gleichmäßigen Abständen nebeneinander angeordnet werden.

In einem Ausführungsbeispiel ist vorgesehen, dass das Kontaktierungselement zwischen der ersten und zweiten Kontaktierungsseite unter Berücksichtigung eines Biegewinkels gebogen ist. Zusätzlich kann dieser Biegewinkel abhängig von einer Positionierung der beiden Kontaktelemente angepasst werden. Dem entsprechend kann das Kontaktierungselement, welches beispielsweise als Blech oder Stromschiene ausgebildet sein kann, je nach Anwendungsfall ausgestaltet werden. Bei der Fertigung von elektronischen Bauelementen, welche beispielsweise in elektronischen Geräten oder in integrierten Schaltkreisen angeordnet sind, kann es zu unterschiedlichen Positionierungen beziehungsweise Anordnungen der Kontaktelemente zueinander kommen. Um beispielsweise einen Höhenunterschied zwischen den Oberflächen der Kontaktelemente auszugleichen, kann das Kontaktierungselement nicht planar beziehungsweise eben ausgestaltet sein, sondern gebogen. Hierbei kann entsprechend eines eingestellten Biegewinkels bei der Herstellung des Kontaktierungselements dies berücksichtigt werden. Insbesondere kann das Kontaktierungselement einen rechten Winkel aufweisen. Somit können die Kontaktierungsseiten zwei parallele unterschiedliche Ebenen sein. Bei dem Biegewinkel können des Weiteren Biegetoleranzen berücksichtigt werden.

In einem Ausführungsbeispiel ist vorgesehen, dass die Auflagebereiche mittels eines Stanzverfahrens, eines Pressverfahrens, oder eines Wälzverfahrens hergestellt sind. Hierbei kann je nach Anforderung und insbesondere Anwendungssituation des Kontaktierungselements ein entsprechendes Verfahren ausgewählt werden. Beispielsweise kann das Kontaktierungselement in einem Verfahren zusammen hergestellt sein. Somit kann in einem Verarbeitungsschritt beispielsweise der Biegewinkel und die Auflagebereiche gleichzeitig hergestellt beziehungsweise eingearbeitet werden.

Ein weiterer Aspekt (zweiter Aspekt) betrifft eine Anordnung mit einem ersten und einem zweiten elektrischen Kontaktelement beziehungsweise elektrischen Kontakt, wobei die beiden elektrischen Kontaktelemente mittels eines Kontaktierungselements nach dem vorherigen Aspekt oder einer vorteilhaften Weiterbildung davon elektrisch kontaktiert sind.

Somit kann das eingangs erläuterte Kontaktierungselement gemäß des ersten Aspekts vorteilhaft dazu verwendet werden, um die elektrischen Kontaktelemente elektrisch miteinander kontaktieren zu können. Somit kann hier das Kontaktierungselement als Stromschiene oder Kontaktbrücke verwendet werden. Des Weiteren können mehrere solcher Kontaktierungselemente verwendet werden, um Kontaktelemente zu kontaktieren.

In einem Ausführungsbeispiel des zweiten Aspekts ist vorgesehen, dass die erste Kontaktierungsseite des Kontaktierungselements mittels des ersten Auflagebereichs, welcher zumindest bereichsweise auf der Oberfläche des ersten Kontaktelements anliegt, mit dem ersten Kontaktelement gekoppelt ist. Des Weiteren ist die zweite Kontaktierungsseite des Kontaktierungselements mittels des zweiten Auflagebereichs, welcher zumindest bereichsweise auf der Oberfläche des zweiten Kontaktelements anliegt, mit dem zweiten Kontaktelement gekoppelt. Somit ist hier eine, insbesondere feste, elektrische Verbindung zwischen dem ersten und dem zweiten Kontaktelement gegeben. Dies kann beispielsweise mittels eines Laserstrahlschweißverfahrens realisiert worden sein. Das Kontaktelement liegt entsprechend der Auflagebereiche beziehungsweise ausschließlich mittels der Auflagebereiche auf der jeweiligen Oberfläche eines Kontaktelements auf beziehungsweise an. Hierbei kann sich eine Fläche beziehungsweise Oberfläche beziehungsweise Außenfläche eines jeweiligen Auflagebereichs direkt an der Oberfläche der Kontaktelemente zumindest bereichsweise, insbesondere vollständig, aufliegen. Somit kann eine punktuelle oder eine flächige Auflage zwischen Auflagebereich und Kontaktelementen hergestellt sein.

Durch die Anordnung ist insbesondere eine, im Wesentlichen verlustminimierte, elektrische Verbindung und somit eine elektrische Stromübertragung zwischen den Kontaktelementen gegeben.

In einem Ausführungsbeispiel des zweiten Aspekts ist vorgesehen, dass mittels eines Laserstrahlschweißverfahrens der erste Auflagebereich zumindest teilweise mit dem ersten Kontaktelement und mittels des Laserstrahlschweißverfahrens der zweite Auflagebereich zumindest teilweise mit dem zweiten Kontaktelement stoffschlüssig verbunden ist. Vor allem kann mit Hilfe einer Lasereinheit beziehungsweise eines Lasers auf den Auflageflächen beziehungsweise Auflagepunkten, also den Auflagebereichen, welche auf der Oberfläche der Kontaktelemente anliegen, ein Aufschmelzen beziehungsweise Verschmelzen der dortigen Werkstoffe des Kontaktierungselements und der Kontaktelemente hergestellt werden. Mit anderen Worten ausgedrückt ist eine elektrische Verbindung und somit ein Stromfluss von den Kontaktelementen zueinander über eine stoffschlüssige Verbindung mit dem Kontaktierungselement möglich.

Das Kontaktierungselement ist jeweils mittels des Auflagebereichs stoffschlüssig mit dem Kontaktelement kontaktiert beziehungsweise gekoppelt. Somit erfolgt ein Stromfluss über die stoffschlüssige Verbindung zwischen Kontaktelement und Auflagebereich.

In einem Ausführungsbeispiel des zweiten Aspekts ist vorgesehen, dass das Kontaktierungselement mittels der Auflagebereiche punktuell oder flächig beziehungsweise eben mit den beiden Kontaktelementen kontaktiert ist. Die Anordnung hat vor allem den Vorteil, dass die Kontaktstellen zwischen Kontaktierungselement, welches beispielsweise eine Kupferbahn sein kann, und dem Kontaktelement keinen Spalt und somit einen Nullspalt aufweisen. Dies wird dadurch erreicht, dass die Kontaktierung mittels eines Verschmelzens des Materials der Auflagebereiche mit den Kontaktelementen erfolgt. Dadurch liegt zum einen eine punktuelle Kontaktierung vor, welche keinen Nullspalt aufweisen kann, da hier eine stoffschlüssige Verbindung vorliegt, und dass nur wenige Punkte mittels eines Laserstrahlschweißverfahrens aufgeschmolzen werden, nämlich die Auflagebereiche.

Ein weiterer Aspekt (dritter Aspekt) betrifft ein Verfahren zum Kontaktieren von zumindest zwei elektrischen Kontaktelementen mittels eines Laserstrahlschweißverfahrens, aufweisend:
- Positionieren eines Kontaktierungselements nach einem der vorhergehenden Aspekte oder einer vorteilhaften Ausführung davon derart, dass der erste Auflagebereich der ersten Kontaktierungsseite auf einer Oberfläche des ersten Kontaktelements und der zweite Auflagebereich der zweiten Kontaktierungsseite auf einer Oberfläche des zweiten Kontaktelements anliegen,
- Teilweises Aufschmelzen des Materials der ersten und zweiten Auflagebereiche durch das Laserstahlschweißverfahren, wobei der erste Auflagebereich stoffschlüssig mit dem ersten Kontaktelement und der zweite Auflagebereich stoffschlüssig mit dem zweiten Kontaktelement verbunden werden, wodurch das erste Kontaktelement elektrisch mit dem zweiten Kontaktelement verbunden ist.

Mittels des vorgeschlagenen Verfahrens kann ein effizienteres Kontaktieren von elektrischen Kontakten von elektrischen Bauelementen erfolgen. Hierzu wird vorteilhaft ein Laserstrahlschweißverfahren angewendet. Mit Hilfe des Laserstrahlschweißverfahrens kann kontaktlos, mittels eines Laserstrahls, eine elektrische Verbindung zwischen zwei Bauteilen, hier das Kontaktierungselement mit den Kontaktelementen realisiert werden.

Insbesondere kann das Verfahren bei der Fertigung von Elektronikbauteilen oder Leistungselektronikbauteilen verwendet werden.

Das eingangs genannte Kontaktierungselement gemäß des ersten Aspekts kann zunächst, beispielsweise in einem ersten Verarbeitungsschritt, an den Kontaktelementen positioniert beziehungsweise angelegt beziehungsweise angebracht werden. Hier liegt das Kontaktierungselement mittels der Auflagebereiche auf den Kontaktelementen auf beziehungsweise an. Mittels eines Lasers oder einer Lasereinheit kann anschließend das Material beziehungsweise der Stoff beziehungsweise Werkstoff des ersten und zweiten Auflagebereichs aufgeschmolzen beziehungsweise erwärmt werden. Dadurch kann eine stoffschlüssige Verbindung beziehungsweise eine Schweißverbindung, zwischen den Kontaktierungsseiten des Kontaktierungselements mit den Kontaktelementen erfolgen, so dass über das erste Kontaktelement über das Kontaktierungselement hin zum zweiten Kontaktelement oder umgekehrt ein Stromfluss erfolgen kann.

Beispielsweise können das Positionieren und das Aufschmelzen mittels eines automatisierten Systems beziehungsweise einer automatisierten Vorrichtung erfolgen. Hierzu kann beispielsweise ein Kontaktierungssystem beziehungsweise eine Kontaktierungsvorrichtung als automatische, elektromechanische Einheit verwendet werden, um eine Kontaktierung der elektrischen Kontaktelemente automatisiert durchführen zu können.

In einem Ausführungsbeispiel des dritten Aspekts ist vorgesehen, dass mit einer Lasereinheit Energie im Bereich, in welchem ein jeweiliger Auflagebereich an einer jeweiligen Oberfläche der Kontaktelemente anliegt, eingebracht wird, um das dortige Material aufzuschmelzen. Dadurch kann zwischen den Auflagebereichen und den Kontaktelementen jeweils eine stoffschlüssige Verbindung, also eine Schmelzverbindung, realisiert beziehungsweise hergestellt werden, so dass ohne einen Spalt und ohne viel Stoffvolumen aufschmelzen zu müssen, eine gute elektrische Kontaktierung gegeben ist.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Zu der Erfindung gehören auch Weiterbildungen der erfindungsgemäßen Anordnung und des erfindungsgemäßen Verfahrens, die Merkmale aufweisen, wie sie bereits im Zusammenhang mit den Weiterbildungen des erfindungsgemäßen Kontaktierungselements beschrieben worden sind. Aus diesem Grund sind die entsprechenden Weiterbildungen der erfindungsgemäßen Anordnung und des erfindungsgemäßen Verfahrens hier nicht noch einmal beschrieben.

Die Erfindung umfasst auch die Kombinationen der Merkmale der beschriebenen Ausführungsformen.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

Die vorliegende Erfindung wird nun anhand der beigefügten Zeichnungen näher erläutert, in denen zeigen:
- FIG 1: eine schematische Anordnung von kontaktierten Kontaktelementen mittels eines Kontaktierungselements;
- FIG 2: eine weitere schematische Ausführung betreffend die kontaktierten Kontaktstellen beziehungsweise Kontaktelemente;
- FIG 3: eine weitere schematische Darstellung der Anordnung aus FIG 1, wobei hier die Auflagebereiche eine Plateauform aufweisen,
- FIG 4: eine weitere Ausgestaltung der Anordnung aus FIG 1, wobei hier die Auflagebereiche pyramidenförmig ausgestaltet sind; und
- FIG 5: einen schematischen Ablauf betreffend ein Kontaktieren der elektrischen Kontaktelemente.

Die nachfolgend näher geschilderten Ausführungsbeispiele stellen bevorzugte Ausführungsformen der vorliegenden Erfindung dar.

In den Figuren sind funktionsgleiche Elemente mit denselben Bezugszeichen versehen.

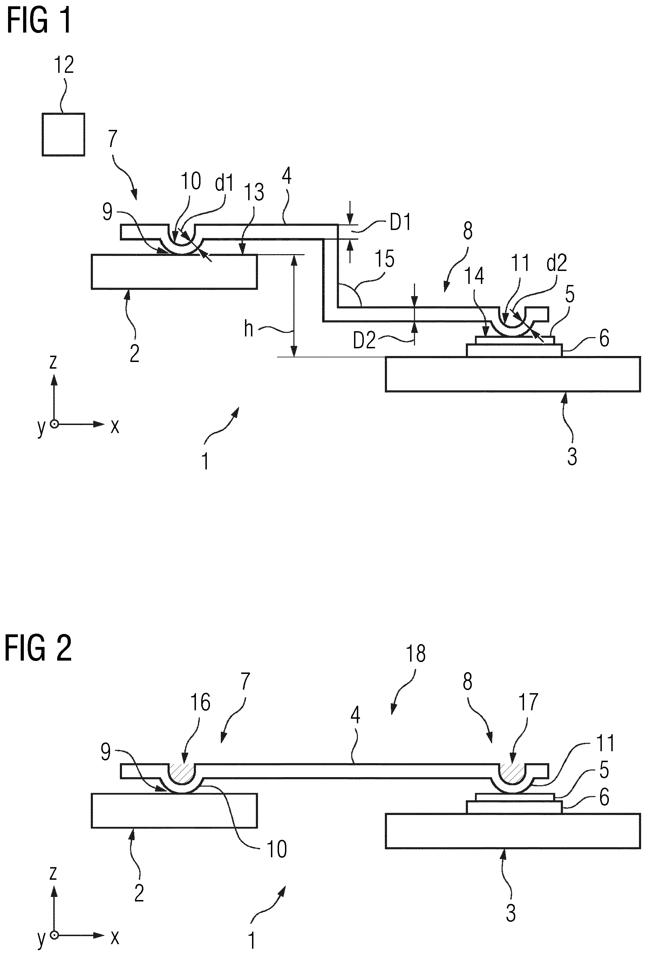

In der FIG 1 ist eine beispielhafte Darstellung einer Anordnung 1 zu sehen. Die Anordnung 1 umfasst ein erstes elektrisches Kontaktelement 2 (ein elektrischer Kontakt) und zumindest ein weiteres, insbesondere zum ersten Kontaktelement 2 unterschiedliches beziehungsweise getrenntes, zweites elektrisches Kontaktelement 3. Bei den Kontaktelementen 2, 3 handelt es sich um elektrische Kontakte, welche als Strom- beziehungsweise Spannungsanschlüsse bezeichnet werden können.

Insbesondere ist in der FIG 1 eine beispielhafte seitliche Darstellung gezeigt. Um einen Stromfluss von dem Kontaktelement 2 zum Kontaktelement 3 oder umgekehrt ermöglichen zu können, ist erfindungsgemäß ein Kontaktierungselement 4 vorgesehen. Bei diesem Kontaktierungselement 4 kann es sich um eine elektrische Verbindung zur Stromübertragung handeln. Insbesondere kann es sich bei dem Kontaktierungselement 4 um einen Draht, ein Kupferblech, ein metallisches Element oder ein sonstiges elektrisch leitfähiges Element handeln.

Um das Kontaktierungselement 4 zum einen mit dem ersten Kontaktelement 2 und dem zweiten Kontaktelement 3 kontaktieren beziehungsweise verbinden zu können, ist dieses speziell ausgebildet, insbesondere vorverarbeitet.

Die Anordnung 1 kann beispielsweise Bestandteil einer Elektronikkomponente oder einer Leistungselektronikkomponente sein.

Beispielsweise kann das Kontaktelement 3 mehrlagig bzw. mehrteilig, wie in der FIG 1 beispielhaft dargestellt ausgebildet sein. Das Kontaktelement 2 kann wiederum einteilig ausgebildet sein.

Beispielsweise kann das Kontaktelement 3 eine Stromversorgung 5 für ein darunter befindliches, insbesondere empfindliches, elektronisches Bauteil 6 aufweisen. Dieses kann wiederum auf einer Platine oder einem elektrischen Gerät angeordnet sein.

Vorteilhaft erfolgt eine Kontaktierung des Kontaktierungselements 4 mit den Kontaktelementen 2, 3 über ein punktuelles beziehungsweise individuelles Laserstrahlschweißverfahren. Hierzu kann an speziell vorgegebenen Stellen beziehungsweise Punkten beziehungsweise Bereichen des Kontaktierungselements 4 ein Energieeintrag zum Verschweißen vorgenommen werden.

Hierbei sind zwei Herausforderungen zu meistern. Zum einen sollte zwischen zu kontaktierenden Bereichen kein Spalt vorliegen, da dies zur Rissbildung oder Beschädigungen der empfindlichen Elektronik beziehungsweise Bauteile führen kann. Zum anderen sollte aufgrund der immer kleiner dimensionierten elektronischen Komponenten ein Energieeintrag und insbesondere ein aufgeschmolzenes Volumen geringgehalten werden. Hierzu weist das Kontaktierungselement 4 eine erste Kontaktierungsseite 7 und eine zweite Kontaktierungsseite 8 auf. In x-Richtung betrachtet können dies die gegenüberliegenden Endseiten des Kontaktierungselements 4 sein.

Mittels der ersten Kontaktierungsseite 7 kann das Kontaktelement 2 und mittels der zweiten Kontaktierungsseite 8 kann das zweite Kontaktierungselement 3 kontaktiert beziehungsweise elektrisch verbunden beziehungsweise gekoppelt werden.

Um zum einen Nullspalt 9, wie in der FIG 1 schematisch dargestellt, und ein möglichst kleines Stoffvolumen aufschmelzen zu müssen, weist das Kontaktierungselement 4 zumindest zwei Auflagebereiche 10, 11 auf. Hierbei ist der erste Auflagebereich 10 Bestandteil der ersten Kontaktierungsseite 7 und der zweite Auflagebereich 11 ist Bestandteil der zweiten Kontaktierungsseite 8. Bei diesen Auflagebereichen 10, 11 kann es sich um speziell ausgeprägte beziehungsweise ausgebildete Teilbereiche der Kontaktierungsseiten 7, 8 handeln. Vor allem kann mit Hilfe der Auflagebereiche 10, 11 eine punktuelle Auflage des Kontaktierungselements 4 in Bezug zu den Kontaktelementen 2, 3 realisiert werden. Dies bietet den Vorteil, dass zum einen an den Auflagebereichen 10, 11, also auf Auflagepunkte beziehungsweise Auflageflächen, ein direktes Aufliegen zu den Kontaktelementen 2, 3 gegeben ist und somit kein Spalt beziehungsweise nur ein geringer Spalt vorliegt. Zum einen kann in diesen Bereichen Auflagebereiche 10, 11 mittels einer Lasereinheit 12 ein Aufschmelzen des dortigen Werkstoffs realisiert beziehungsweise durchgeführt werden.

Der erste Auflagebereich 10 liegt auf einer Oberfläche 13 des Kontaktelements 2 zumindest bereichsweise auf, insbesondere direkt auf. Der zweite Auflagebereich 11 liegt, insbesondere direkt, auf einer Oberfläche 14 des zweiten Kontaktelements 3 an beziehungsweise auf. In diesen speziellen Bereichen 10, 11 kann mittels eines Laserstrahls beispielsweise ein Aufschmelzen hervorgerufen werden, um hier eine stoffschlüssige Verbindung zu realisieren.

Wie in der FIG 1 exemplarisch dargestellt, ragen die Auflagebereiche 10, 11 in Bezug zu einer jeweiligen Haupterstreckungsebene der Kontaktierungsseiten 7, 8 nach außen (in negativer z-Richtung) beziehungsweise zum Kontaktelement 2, 3 hin. Somit ist eine punktuelle Auflage für das Kontaktierungselement 4 gegeben.

Die Auflagebereiche 10, 11 können als Verjüngungen einer Materialdicke des Kontaktierungselements 4 bezeichnet werden. Dadurch kann eine Reduktion des Schmelzvolumens erreicht werden, da innerhalb dieser Verjüngungen ein Aufschmelzen mittels der Lasereinheit 12 erfolgt. Die hierzu vorgeschlagenen Verjüngungen, also die Bereiche 10, 11, können punktuelle oder linienförmige Auflagen sein. Beispielsweise kann die erste Kontaktierungsseite eine Materialdicke D1 und die zweite Kontaktierungsseite 8 eine Materialdicke D2 aufweisen. Die beiden Materialdicken D1, D2 können gleich sein. Ebenso können je nach Anwendungsfall diese unterschiedlich ausgestaltet sein. Diesbezüglich kann eine Materialdicke d1 des ersten Auflagebereichs 10 kleiner als die Materialdicke D1 sein. Eine Materialdicke d2 des zweiten Auflagebereichs 11 kann wiederum kleiner als die Materialdicke D2 sein beziehungsweise Auflageflächen 10, 11 können über Stanzverfahren, Pressverfahren oder Walzverfahren hergestellt werden. Beispielsweise kann die Materialdicke d1, d2 eine Materialdicke von ca. 5 µm bis 500 µm aufweisen. Dies wäre der Fall, wenn auch sensible Komponenten angebunden beziehungsweise angeschweißt werden sollen, da hier ein geringeres Aufschmelzvolumen verwendet werden sollte. Bei nicht sensiblen Kontaktpartnern wie Substrate oder Kupfer Lead Frames, können die Dicken d1, d2 auch größer als 500 µm sein.

Das Kontaktierungselement 4 kann beispielsweise als Formteil bezeichnet werden. Dies kann eine erhöhte Biegetoleranz aufweisen, und dennoch zumindest einen Nullspalt 9 aufweisen.

Wie in der FIG 1 zu sehen, befinden sich die Kontaktelemente 2, 3 auf unterschiedlichen Höhen zueinander. Hierbei weisen die Kontaktelemente 2, 3 in z-Richtung einen Höhenunterschied h auf. Um hier dennoch ein effizientes Kontaktieren zu ermöglichen, kann das Kontaktierungselement 4 anwenderspeziell beziehungsweise situationsgerecht angepasst werden. Hierzu kann das Kontaktierungselement 4, wie hier gezeigt, gebogen sein. Hierzu kann unter Berücksichtigung eines Biegewinkels 15 der Höhenunterschied h entsprechend ausgeglichen werden. Wie hier dargestellt, ist hier der Biegewinkel 15 im Wesentlichen 90 Grad, so dass hier eine rechtwinklige Biegung vorliegt. Mit anderen Worten ausgedrückt befinden sich die Kontaktierungsseiten 7, 8 parallel beabstandet zueinander.

Je nach Anwendungsfall der Anordnung 1 beispielsweise können mehr oder weniger solcher Auflagebereiche 10, 11 vorgesehen sein. Somit kann je nachdem, in welchem Umfang die Kontaktierung erfolgen soll, die Kontaktierungsseiten 7, 8 mehrere Auflagebereiche aufweisen. Dies bietet zum einen Vorteile beim Aufschmelzen beziehungsweise beim Herstellen der stoffschlüssigen Verbindung, da zum einen eine bessere elektrische Kontaktierung vorhanden sein kann und der benötigte Wärmeeintrag und das benötigte jeweils punktuelle Aufschmelzvolumen geringgehalten werden kann. Befinden sich mehrere Auflagebereiche beziehungsweise Verjüngungen nebeneinander, so kann mit einer deutlich einfacheren Biegeeinrichtung ("Biegetool") ein Kontakt aller Auflagebereiche mit dem jeweiligen Kontaktelement 2, 3 erreicht werden, da sich die Verjüngungen gut verformen lassen. Die Folge kann eine gute Anbindung an das Werkstück beziehungsweise Kontaktierungselement 4 sein. Zusätzlich kann durch die Verjüngung der Materialdicke das aufzuschmelzende Metallvolumen, wie zum Beispiel ein Kupfervolumen, reduziert werden. Hierdurch kann der Stress beim nachfolgenden Abkühlen der Bauteile deutlich reduziert werden. Des Weiteren kann bei Vorhandensein mehrerer Auflagebereiche pro Kontaktierungsseite 7, 8 eine gleich verteilte, insbesondere gleichmäßige nebeneinander angeordnete, Anordnung durchgeführt werden, so dass vor allem für ein automatisiertes Kontaktieren beziehungsweise und/oder Aufschmelzen eine Effizienzsteigerung erfolgen kann.

Neben der hier dargestellten abgewinkelten Gestalt des Kontaktierungselements 4 kann ebenso eine zueinander ebene beziehungsweise im Wesentlichen ebene Anordnung beziehungsweise Positionierung der Kontaktelemente 2, 3 gegeben sein. Dies ist beispielsweise in der FIG 2 dargestellt.

Die Auflagebereiche 10, 11 können unterschiedlichst ausgestaltet sein. Beispielsweise können die Auflagebereiche 10, 11 als Materialverjüngungen bezeichnet werden. Beispielsweise können hier beliebige geometrische Ausgestaltungen vorgenommen werden. Neben der dargestellten Kugelform, wie es in der FIG 1 zu sehen ist, sind auch andere Geometrien denkbar, wie zum Beispiel eine 2-fach-Kugel, eine 3-fach-Kugel, eine 4-fach-Kugel oder eine Pyramiden-Geometrie. Hintergrund hierzu ist, dass sich die Verjüngungen der Materialdicke beim Kontakt dann teilweise besser verformen können und somit sichergestellt werden kann, dass ein Nullspalt 9 vorhanden ist. In diesem Fall kann die Lasereinheit 12 entsprechend gesteuert werden, so dass der Laser an der entsprechenden Position der Auflagebereiche 10, 11 einkoppeln kann.

Wie in der FIG 1 exemplarisch dargestellt, weisen die Auflagebereiche 10, 11 eine Kugelform beziehungsweise eine kugelförmige Geometrie auf. Hierbei sind diese insbesondere als Halbkugeln, insbesondere als hohle Halbkugeln dargestellt.

Mit anderen Worten ausgedrückt ist an den Stellen der Auflagebereiche 10, 11 in negativer z-Richtung das dortige Material des Kontaktierungselements 4 nach unten gedrückt beziehungsweise verformt beziehungsweise gestanzt. Somit ist ein Bereich 16, 17 (vgl. FIG 2) von einem Material frei. Mit anderen Worten ausgedrückt ist in diesen Bereichen 16, 17 kein Material vorhanden. Diese Bereiche 16, 17 können als Innenbereiche bezeichnet werden und weisen keinerlei Material, sondern Luft beispielsweise auf. Diese Bereiche 16, 17 können sich von einer Seite der Auflagebereiche 10, 11, welche auf einer jeweiligen Oberfläche 13, 14 anliegen, bis zu einer Oberseite 18 (vgl. FIG 2) des Kontaktierungselements 4, welches sich in positiver z-Richtung oben befindet, ausgebildet sein. Somit kann in diesen freien Bereichen 16, 17 ein Lasereintrag von oben, also in negativer z-Richtung, erfolgen.

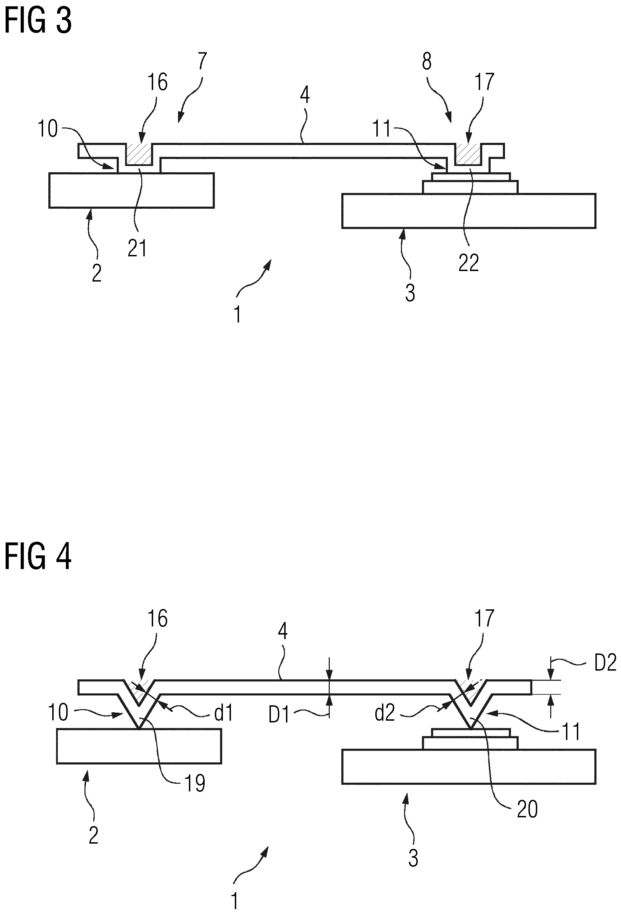

In einer weiteren Ausgestaltung kann der erste Auflagebereich 10, 11 pyramidenförmig beziehungsweise dreieckförmig ausgestaltet sein, wie es beispielsweise in der FIG 4 zu sehen ist. Hierbei sind wiederum die Bereiche 16, 17 mit Luft gefüllt und weisen kein Material des Kontaktierungselements 4 auf. Eine jeweilige Spitze dieser pyramidenförmigen Geometrien (vgl. FIG 4) ist jeweils in Richtung der Kontaktelemente 2, 3 angeordnet. Mit anderen Worten ausgedrückt zeigen die Spitzen 19, 20 der pyramidenförmig dargestellten Auflagebereiche 10, 11 in negativer z-Richtung zu den zu kontaktierenden Kontaktelementen 2, 3.

Wie in der FIG 1 dargestellt, sind die kugelförmigen Auflagebereiche 10, 11 so gewölbt, dass diese in negativer z-Richtung zu den Kontaktelementen 2, 3 hin gewölbt ausgestaltet sind.

Eine weitere denkbare Ausgestaltung der Auflagebereiche 10, 11 ist die Ausgestaltung in einer plateauförmigen geometrischen Gestalt, wie es in der FIG 3 beispielhaft dargestellt ist. Mit anderen Worten ausgedrückt können hier die Auflagebereiche 10, 11 als eine zu den Kontaktelementen 2, 3 gerichtete Erhebung aufweisen. Dabei kann eine jeweilige Außenseite 21, 22 der Auflagebereiche 10, 11 jeder beziehungsweise parallel zu den Oberflächen 13, 14 der Kontaktelemente 2, 3 gerichtet anliegen.

Bei der Anordnung von mehreren Auflagebereichen kann in Betrachtung in positiver z-Richtung, also von unten betrachtet, die Kontaktierungselemente 4 eine noppenartige Gestalt aufweisen, da von dieser Unterseite betrachtet die Auflagebereiche 10, 11 Noppen darstellen können. Diese Noppen wiederum liegen an den Kontaktelementen 2, 3 auf beziehungsweise an.

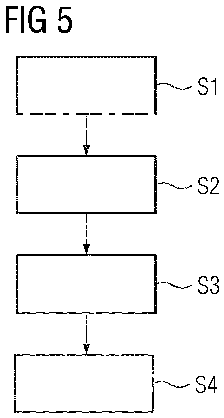

In der FIG 5 wird ein beispielhafter Ablauf eines Kontaktierens der Kontaktelemente 2, 3 erläutert.

Beispielsweise kann in einem Vorverarbeitungsschritt S1 das Kontaktierungselement 4 in einem oder mehreren Verarbeitungsschritten hergestellt werden. Hierzu kann beispielsweise ein Blech entsprechend zugeschnitten beziehungsweise gebogen werden. Parallel oder anschließend können die Auflagebereiche 10, 11 mittels Stanzen, Walzen oder Pressen entsprechend in den Material beziehungsweise in der blechartig ausgestalteten Kontaktierungselement 4 eingearbeitet werden.

In einem nachfolgenden optionalen Schritt S2 kann das Kontaktierungselement 4 an den Kontaktelementen 2, 3, insbesondere von oben, aufgesetzt beziehungsweise aufgelegt werden. Hierbei liegt das Kontaktierungselement 4 mittels der Auflagebereiche 10, 11 an den Kontaktelementen 2, 3 an beziehungsweise auf. In einem optionalen zweiten Schritt S2 kann das Kontaktierungselement 4 je nach Anwendungsfall und insbesondere je nach Kontaktierungsvorgang entsprechend angepasst werden, so dass beispielsweise der Höhenunterschied h ausgeglichen werden kann. Hierzu kann ein Biegevorgang des Kontaktierungselements 4 erfolgen.

Anschließend kann in einem optionalen Schritt S4 ein Aufschmelzen des Materials im Bereich der Auflagebereiche 10, 11 erfolgen. Hierzu kann die Lasereinheit 12 einen entsprechenden Energieeintrag mittels eines Laserstrahls bereitstellen. Durch dieses Aufschmelzen und ein später nachfolgendes Abkühlen kann eine stoffschlüssige Verbindung realisiert beziehungsweise hergestellt werden, so dass die beiden Kontaktelemente 2, 3 über stoffschlüssige Verbindungen zwischen Kontaktierungselement 4 und den Kontaktelementen 2, 3 elektrisch verbunden sind.

Insbesondere kann mit den erläuterten Ausführungen eine Geometrieoptimierung für das Laserschweißen von thermischen und elektrisch leitfähigen Verbindungen durchgeführt werden.

### Bezugszeichenliste

- 1: Anordnung
- 2, 3: erstes und zweites elektrisches Kontaktelement
- 4: Kontaktierungselement
- 5: Stromversorgung
- 6: elektronisches Bauteil
- 7, 8: erste und zweite Kontaktierungsseite
- 9: Nullspalt
- 10, 11: erster und zweiter Auflagebereich
- 12: Lasereinheit
- 13, 14: Oberflächen der Kontaktelemente
- 15: Biegewinkel
- 16, 17: Innenbereiche der Auflagebereiche
- 18: Seite
- 19, 20: Spitzen
- 21, 22: Außenseiten
- d1, d2: Materialdicke der Auflagebereiche
- D1, D2: Materialdicke der Kontaktierungsseite
- h: Höhenunterschied
- S1 bis S4: Schritte

## Patentansprüche

1. Kontaktierungselement (4) zum elektrischen Kontaktieren von zumindest zwei elektrischen Kontaktelementen (2, 3), mit
- einer ersten Kontaktierungsseite (7) zum Kontaktieren des ersten elektrischen Kontaktelementes (2),
- einer zweiten Kontaktierungsseite (8) zum Kontaktieren des zweiten elektrischen Kontaktelements (3), wobei
- die erste Kontaktierungsseite (7) zumindest einen ersten Auflagebereich (10) und die zweite Kontaktierungsseite (8) zumindest einen zweiten Auflagebereich (11) aufweist, wobei
- die erste Kontaktierungsseite (7) mittels des ersten Auflagebereich (10) auf einer Oberfläche (13) des ersten elektrischen Kontaktelements (4) anliegend anordbar ist,
- die zweite Kontaktierungsseite (8) mittels des zweiten Auflagebereich (11) auf einer Oberfläche (14) des zweiten elektrischen Kontaktelements (3) anliegend anordbar ist, und wobei
- der erste Auflagebereich (10) in Bezug zu einer Haupterstreckungsebene der ersten Kontaktierungsseite (7) nach Außen ragt und der zweite Auflagebereich (11) in Bezug zu einer Haupterstreckungsebene der zweiten Kontaktierungsseite (8) nach Außen ragt.

2. Kontaktierungselement (4) nach Anspruch 1, wobei der erste Auflagebereich (10) und der zweite Auflagebereich (11) kugelförmig ausgestaltet sind, wobei der erste Auflagebereich (10) bei einem Kontaktierungsvorgang zum ersten elektrischen Kontaktelement (2) und der zweite Auflagebereich (11) bei dem Kontaktierungsvorgang zum zweiten elektrischen Kontaktelement (3) hin gewölbt sind.

3. Kontaktierungselement (4) nach Anspruch 1, wobei der erste Auflagebereich (10) und der zweite Auflagebereich (11) pyramidenförmig ausgestaltet sind, wobei eine Spitze (19) des pyramidenförmigen ersten Auflagebereichs (10) bei einem Kontaktierungsvorgang zum ersten elektrischen Kontaktelement (2) und eine Spitze (20) des pyramidenförmigen zweiten Auflagebereichs (11) bei dem Kontaktierungsvorgang zum zweiten elektrischen Kontaktelement (3) gerichtet ist.

4. Kontaktierungselement (4) nach Anspruch 1, wobei der erste Auflagebereich (10) und der zweite Auflagebereich (11) plateauförmig ausgestaltet sind, wobei eine zur ersten Kontaktierungsseite (7) parallele Außenseite (21) des plateauförmigen ersten Auflagebereichs (10) bei einem Kontaktierungsvorgang zum ersten elektrischen Kontaktelement (2) und eine zur zweiten Kontaktierungsseite (11) parallele Außenseite (22) des plateauförmigen zweiten Auflagebereichs (11) bei einem Kontaktierungsvorgang zum zweiten elektrischen Kontaktelement (3) gerichtet ist.

5. Kontaktierungselement (4) nach einem der vorhergehenden Ansprüche, wobei eine Materialdicke (d1) des ersten Auflagebereichs (10) kleiner als eine Materialdicke (D1) der ersten Kontaktierungsseite (7) und eine Materialdicke (d2) des zweiten Auflagebereichs (11) kleiner als eine Materialdicke (D2) der zweiten Kontaktierungsseite (8) ist.

6. Kontaktierungselement (4) nach einem der vorhergehenden Ansprüche, wobei die erste und zweite Kontaktierungsseite (7, 8) jeweils weitere Auflagebereiche aufweisen.

7. Kontaktierungselement (4) nach Anspruch 6, wobei die Auflagebereiche der beiden Kontaktierungsseiten (7, 8) jeweils beabstandet nebeneinander angeordnet sind.

8. Kontaktierungselement (4) nach einem der vorhergehenden Ansprüche, wobei das Kontaktierungselement (4) zwischen der ersten und zweiten Kontaktierungsseite (7, 8) unter Berücksichtigung eines Biegewinkels (15) gebogen ist, insbesondere der Biegewinkel (15) abhängig von einer Positionierung der beiden Kontaktelemente (2, 3) anpassbar ist.

9. Kontaktierungselement (4) nach einem der vorhergehenden Ansprüche, wobei die Auflagebereiche (10, 11) mittels eines Stanzverfahren, eines Pressverfahren, oder eines Walzverfahren hergestellt sind.

10. Anordnung (1) mit einem ersten und einem zweiten elektrischen Kontaktelement (2, 3), wobei die beiden elektrischen Kontaktelemente (2, 3) mittels eines Kontaktierungselements (4) nach einem der vorhergehenden Ansprüche elektrisch kontaktiert sind.

11. Anordnung (1) nach Anspruch 10, wobei die erste Kontaktierungsseite (7) des Kontaktierungselements (4) mittels des ersten Auflagebereichs (10), welcher zumindest bereichsweise auf der Oberfläche (13) des ersten Kontaktelements (2) anliegt, mit dem ersten Kontaktelement (2) gekoppelt ist, und die zweite Kontaktierungsseite (8) des Kontaktierungselements (4) mittels des zweiten Auflagebereichs (11), welcher zumindest bereichsweise auf der Oberfläche (14) des zweiten Kontaktelements (3) anliegt, mit dem zweiten Kontaktelement (3) gekoppelt ist.

12. Anordnung (1) nach Anspruch 11, wobei mittels eines Laserstrahlschweißverfahrens der erste Auflagebereich (10) zumindest teilweise mit dem ersten Kontaktelement (2) und mittels des Laserstrahlschweißverfahrens der zweite Auflagebereich (11) zumindest teilweise mit dem zweiten Kontaktelement (3) stoffschlüssig verbunden ist.

13. Anordnung (1) nach einem der Ansprüche 10 bis 12, wobei das Kontaktierungselement (4) mittels der Auflagebereiche (10, 11) punktuell mit den beiden Kontaktelementen (2, 3) kontaktiert ist.

14. Verfahren zum Kontaktieren von zumindest zwei elektrischen Kontaktelementen (2, 3) mittels eines Laserstrahlschweißverfahren, aufweisend:
- Positionieren eines Kontaktierungselements (4) nach einem der Ansprüche 1 bis 9 derart, dass der erste Auflagebereich (10) der ersten Kontaktierungsseite (7) auf einer Oberfläche (13) des ersten Kontaktelements (2) und der zweite Auflagebereich (11) der zweiten Kontaktierungsseite (8) auf einer Oberfläche (14) des zweiten Kontaktelements (3) anliegen,
- Teilweises Aufschmelzen des Materials der ersten und zweiten Auflagebereiche (10, 11) durch das Laserstahlschweißverfahren, wobei der erste Auflagebereich (10) stoffschlüssig mit dem ersten Kontaktelement (2) und der zweite Auflagebereich (11) stoffschlüssig mit dem zweiten Kontaktelement (3) verbunden werden, wodurch das erste Kontaktelement (2) elektrisch mit dem zweiten Kontaktelement (3) verbunden ist.

15. Verfahren nach Anspruch 14, wobei mit einer Lasereinheit (12) Energie im Bereich, in welchem ein jeweiliger Auflagebereich (10, 11) an einer jeweiligen Oberfläche (13, 14) der Kontaktelemente (2, 3) anliegt, eingebracht wird, um das dortige Material teilweise aufzuschmelzen.
